# EUROPÄISCHE PATENTANMELDUNG

(11) **EP 1 693 594 A1**
(43) Veröffentlichungstag der Anmeldung: **23.08.2006**
(21) Anmeldenummer: 05003269.7
(22) Anmeldetag: 16.02.2005
(51) Int. Cl.: F16F 13/10

(54) **Hydraulisch dämpfendes Lager**

(71) Anmelder: Carl Freudenberg KG, 69469 Weinheim (DE)
(72) Erfinder: Erl, Andreas, 16761 Henningsdorf (DE); Gürtler, Daniel, 12057 Berlin (DE); Hack, Rüdiger, 67346 Speyer (DE); Pfaff, Thomas, 16766 Kremmen-Beetz (DE); Hanschke, Ulrich, 16727 Velten (DE); Okounev, Mikhail, 14473 Potsdam (DE)

(57) **Zusammenfassung**

Hydraulisch dämpfendes Lager (1), umfassend ein Auflager (2) und ein im Wesentlichen zylinderförmiges Traglager (3), die durch einen Federkörper (4) sowie eine auf der dem Auflager (2) axial abgewandten Seite angeordnete Membran (5), wobei Auflager (2), Traglager (3), Federkörper (4) und Membran (5) einen Raum (6) begrenzen, der mit Dämpfungsflüssigkeit gefüllt ist, wobei der Membran (5) auf der dem Raum (6) zugewandten Seite ein Flansch (7) zugeordnet ist und dass der Flansch (7) an einer einen Gegenflansch (8) bildenden Querschnittsverjüngung angeordnet ist.

## Beschreibung

### Technisches Gebiet

Die Erfindung betrifft ein hydraulisch dämpfendes Lager, umfassend ein Auflager und ein im Wesentlichen zylinderförmiges Traglager, die durch einen Federkörper sowie eine auf der dem Auflager axial abgewandten Seite angeordnete Membran, wobei Auflager, Traglager, Federkörper und Membran einen Raum begrenzen, der mit Dämpfungsflüssigkeit gefüllt ist.

### Stand der Technik

Derartige Lager sind aus der EP 0 809 040 B1 bekannt. Das Lager weist eine Membran mit einem zylinderförmigen Abschnitt auf. Dieser Abschnitt schmiegt sich an die zylinderförmige Innenwand des Traglagers an und bildet dadurch die Innenwand des mit Dämpfungsflüssigkeit gefüllten Raums, Am Außenumfang der Membran ist ein Ring angeordnet, der an der Innenwand des Traglagers anliegt und eine Zwischenschicht zwischen dem Traglager und dem Federkörper bildet. Dadurch ist die Montage des Lagers aufwendig.

### Darstellung der Erfindung

Der Erfindung liegt die Aufgabe zugrunde, ein Lager bereitzustellen, welches besonders einfach montierbar ist und einfach an verschiedene Anforderungen anpassbar ist.

Die Aufgabe wird mit den Merkmalen von Patentanspruch 1 gelöst. Auf vorteilhafte Ausgestaltungen nehmen die Unteransprüche Bezug.

Zur Lösung der Aufgabe ist der Membran auf der dem Raum zugewandten Stimseite ein Flansch zugeordnet und der Flansch ist an einer einen Gegenflansch bildenden Querschnittsverjüngung angeordnet.
Zur Montage wird die Membran in das Traglager so weit eingeschoben, bis der Flansch der Membran auf dem Gegenflansch anliegt. Dadurch vereinfacht sich die Montage der Membran. Die korrekte Lage der Membran kann schon während der Montage festgestellt werden, da der Flansch der Membran bei korrekter Montage auf dem gesamten Umfang den Gegenflansch berührt. Da sich die in dem Traglager montierten Komponenten nicht zwangsläufig berühren, kann die Montage der Komponenten unabhängig voneinander erfolgen und es können je nach Anwendungsfall unterschiedlich ausgelegte Komponenten miteinander kombiniert werden, Dadurch ergibt sich ein Lager, bei dem die Komponenten nach Art eines Baukastens kombiniert werden können.

Der Membran kann außenumfangsseitig ein Ring aus einem metallischen Werkstoff zugeordnet sein. Durch den Ring wird die Stabilität der Membran erhöht. Der Ring kann ebenfalls einen Flansch aufweisen. Dieser zusätzliche Flansch erhöht die Stabilität der Membran gegenüber hohen Innendrücken des Raums, wie sie bei hohen dynamischen Belastungen des Lagers auftreten können.

Die Membran kann aus einem elastomerem Werkstoff gebildet sein der den Ring allseitig umgibt. Dadurch ergibt sich eine flüssigkeitsdichte Membran.

Die Membran kann kraft- und/oder formschlüssig in dem Traglager gehalten sein. Die Membran ist nach dem Fügen durch den Kraft- und/oder Formschluss ausreichend und dichtend in dem Traglager fixiert. Ein zusätzlicher Montageschritt, wie beispielsweise Kleben, kann entfallen

Die Membran kann außenumfangsseitig eine Profilierung aufweisen. Durch die Profilierung erhöht sich die Dichtigkeit der Membran. Des Weiteren vereinfacht sich die Montage, da die Profilierung die Flexibilität der Membran am Außenumfang erhöht.

Der Federkörper kann aus elastomerem Werkstoff gebildet sein und außenumfangsseitig eine im wesentlichen zylinderförmig ausgebildete Verstärkung aufweisen die zumindest teilweise von dem Elastomer des Federkörpers umgeben ist. Der Verstärkungsring erhöht die Stabilität des Federkörpers an dessen Außenumfang, wodurch die Montage des Federkörpers aufgrund der Formstabilität vereinfacht wird.

Das Traglager kann am Außenumfang einen Befestigungsflansch aufweisen. Mittels des Befestigungsflansches kann das Lager an angrenzenden Bauteilen befestigt werden.

Der Federkörper und das Auflager können eine vormontierbare Einheit bilden. Der Federkörper aus einem elastomerem Werkstoff kann dabei an dem Auflager und dem Verstärkungsring anvulkanisiert sein. Diese vormontierbare Einheit kann mit einfachen Mitteln in den Tragring eingepresst werden.

In einer Ausgestaltung kann an dem Auflager eine in den Raum ragende Planscherscheibe angeordnet sein. Die Planscherscheib wirkt als Dämpfungselement, welches Auslenkungen des Federkörpers aufgrund der Verdrängung der in dem Raum befindlichen Dämpfungsflüssigkeit dämpft.

In einer anderen Ausgestaltung kann in dem Raum ein Kanallager angeordnet sein, welches den Raum in einen Arbeits- und einen Ausgleichsraum teilt. Das Kanallager dämpft ebenfalls Auslenkungen des Federkörpers. Das Kanallager kann mit der Planscherscheibe kombiniert in einem Lager angeordnet sein. Da Planscherscheibe und Kanallager in voneinander abweichenden Frequenzbereichen optimale Dämpfungseigenschaften a fweisen, vergrößert sich dadurch das Frequenzspektrum der optimalen Dämpfung.

Das Traglager kann auf der dem Auflager abgewandten Seite einen Deckel aufweisen, Der Deckel schützt die Membran vor Beschädgungen durch äußere Einflüsse und die Steifigkeit des Traglagers kann sich erhöhen. Der Deckel kann kraft-, form- und/oder stoffschlüssig an dem Lager algebracht sein oder materialeinheitlich und einstückig mit dem Traglager ausgebildet sein.

Die dem Auflager zugewandte Seite des Traglagers kann zumindest teilweise umgebördelt sein. Dadurch sind Traglager und das Auflager mit dem Traglager verliersicher miteinander verbunden, was insbesondere beim Transport und während der Montage vorteilhaft ist.

### Kurzbeschreibung der Zeichnung

Einige Ausführungsbeispiele des erfindungsgemäßen Lagers werden nachfolgend anhand der Figuren 1 bis 3 erläutert. Diese zeigen, jeweils schematisch:
Fig. 1 ein Lager mit einer Planscherscheibe als Dämpfungselement;
Fig. 2 ein Lager mit einem Kanallager als Dämpfungselement;
Fig. 3 ein Lager mit einer Planscherscheibe und einem Kanallager,

### Ausführung der Erfindung

Die Figuren zeigen ein hydraulisch dämpfendes Lager 1 mit einem Auflager 2 und einem zylinderförmigen Traglager 3. Auflager 2 und Traglager 3 sind durch einen Federkörper 4 verbunden. Auf der dem Auflager 2 axial abgewandten Seite des Traglagers 3 ist eine Membran 5 aus einem elastomerem Material angeordnet. Die Membran ist kraft- und formschlüssig in dem Traglager 3 gehalten. In der Membran 5 ist außenumfangsseitig ein Ring 9 aus einem metallischen Werkstoff angeordnet, wobei der elastomere Werkstoff der Membran 5 den Ring allseitig umgibt. Die Membran 5 weist an ihrem Außenumfang eine Profilierung auf. Zur Fixierung in dem Traglager 3 weist die Membran 5 auf der dem Raum 6 zugewandten Seite einen Flansch 7 auf, wobei der Flansch 7 an einer einen Gegenflansch 8 bildenden Querschnitfsverjüngung angeordnet ist. Auflager 2, Traglager 3, Federkörper 4 und Membran 5 begrenzen einen mit Dämpfungsflüssigkeit gefüllten Raum 6. Der Federkörper 4 ist aus einem elastomerem Werkstoff gebildet und weist außenumfangsseitig eine zylinderförmig ausgebildete Verstärkung 11 auf. Die Verstärkung 11 ist im zylinderförmigen Abschnitt von dem Elastomer des Federkörpers 4 umgeben. Dabei bildet der Federkörper 4 mit der Verstärkung 11 sowie das Auflager 2 eine vormontierbare Einheit. Das Traglager 3 weist am Außenumfang einen Befestigungsflansch 12 zur Befestigung des Lagers an angrenzenden Bauteilen auf. Die dem Auflager 2 zugewandte Seite des Traglagers 3 ist teilweise umgebördelt. In diesen Ausführungen sind zungenförmige Abschnitte 18 des Traglagers um die Verstärkung 11 umgebördelt.

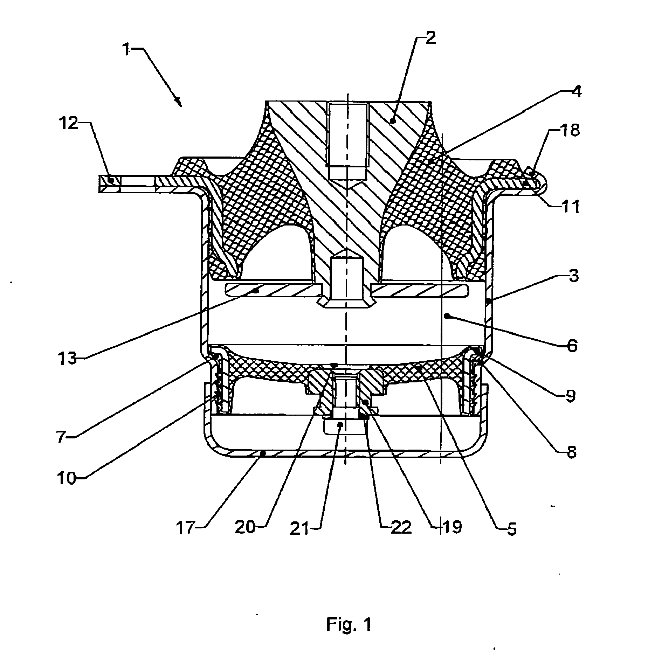

Figur 1 zeigt ein Lager 1 welches eine in den Raum 6 ragende Planscherscheibe 13 aufweist. Die Planscherscheibe 13 ist an dem Auflager 2 fixiert. In der Membran 5 ist konzentrisch ein Zugnippel 19 angeordnet Der Zugnippel 19 dient der Fixierung der Membran 5 bei eine Befüllung des Raums 6 unter Vakuum-Bedingungen. Der Zugnippel 19 weist eine Bohrung 20 mit einem Gewinde auf. In der Bohrung 20 können Werkzeuge befestigt werden. Zum Schutz der Membran 5 ist an dem Traglager 3 auf der dem Auflager 2 abgewandten Seite ein Deckel 17 angeordnet welcher kraftschlüssig befestigt ist.

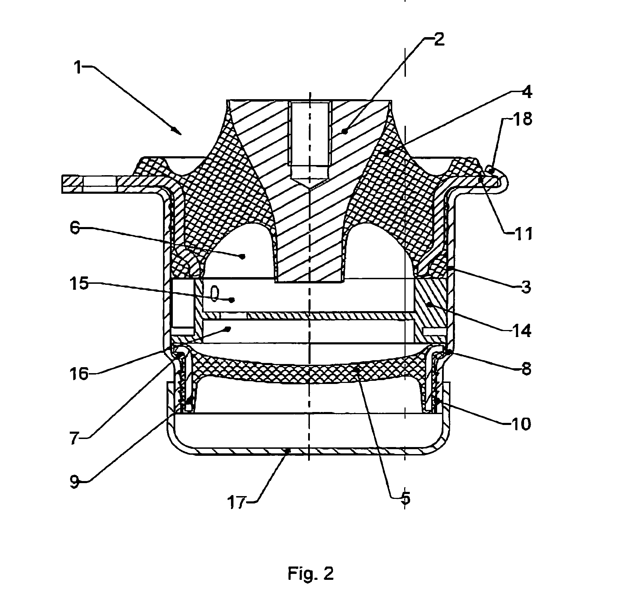

Figur 2 zeigt ein Lager mit einem in dem Raum 6 angeordneten Kanallager 14. Das Kanallager teilt den Raum in einen Arbeits- 15 und einen Ausgleichsraum 16. Der Arbeits- 15 und der Ausgleichsraum 16 sind durch Dämpfungskanäle strömungsleitend miteinander verbunden. Das Kanallager 14 ist unter Vorspannung kraftschlüssig und flüssigkeitsdicht in dem Traglager 3 angeordnet. Durch die Vorspannung wird ein Verschieben des Kanallagers 14 bei dynamischer Beanspruchung des Lagers 1 vermieden. Zum Schutz der Membran 5 ist an dem Traglager 3 auf der dem Auflager 2 abgewandten Seite ein Deckel 17 angeordnet welcher kraftschlüssig befestigt ist.

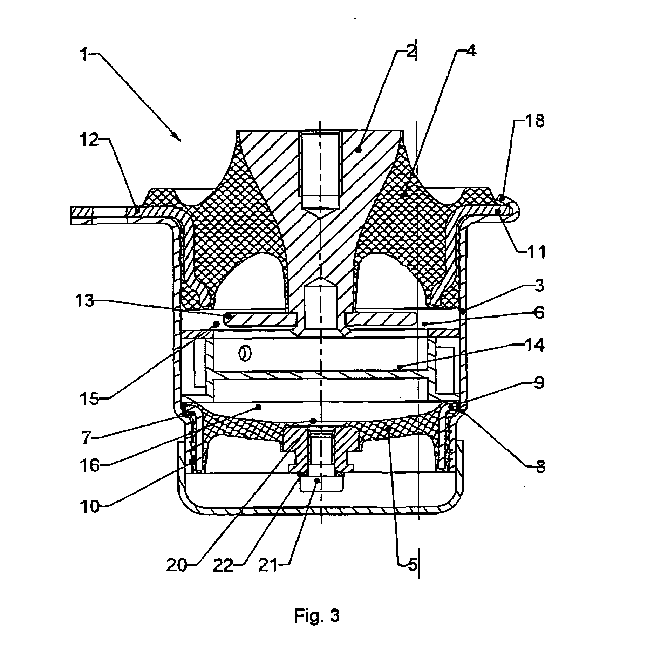

Figur 3 zeigt ein Lager bei dem eine Planscherscheibe 13 und ein Kanallager 14 in dem Raum 6 angeordnet sind. Die Planscherscheibe 13 ist an dem Auflager 2 fixiert, Das Kanallager teilt den Raum in einen Arbeits- 15 und einen Ausgleichsraum 16. Der Arbeits- 15 und der Ausgleichsraum 16 sind durch Dämpfungskanäle strömungsleitend miteinander verbunden. Das Kanallager 14 ist unter Vorspannung kraftschlüssig und flüssigkeitsdicht in dem Traglager 3 angeordnet. Durch die Vorspannung wird ein Verschieben des Kanallagers 14 bei dynamischer Beanspruchung des Lagers 1 vermieden. In der Membran 5 ist konzentrisch ein Zugnippel 19 angeordnet. Der Zugnippel 19 dient der Fixierung der Membran 5 bei einer Befüllung des Raums 6 unter Vakuum-Bedingungen, Der Zugnippel 19 weist eine Bohrung 20 mit einem Gewinde auf. In der Bohrung 20 können Werkzeuge befestigt werden. Die Bohrung 20 ist durch eine Schraube 21 verschlossen, welche eine Dichtung 22 unter Vorspannung setzt, damit das Lager 1 nach vollständiger Montage zur Verwendung verschlossen ist.

## Patentansprüche

1. Hydraulisch dämpfendes Lager (1), umfassend ein Auflager (2) und ein im Wesentlichen zylinderförmiges Traglager (3), die durch einen Federkörper (4) sowie eine auf der dem Auflager (2) axial abgewandten Seite angeordnete Membran (5), wobei Auflager (2), Traglager (3), Federkörper (4) und Membran (5) einen Raum (6) begrenzen, der mit Dämpfungsflüssigkeit gefüllt ist, **dadurch gekennzeichnet, dass** der Membran (5) auf der dem Raum (6) zugewandten Seit ein Flansch (7) zugeordnet ist und dass der Flansch (7) an einer einen Gegenflansch (8) bildenden Querschnittsverjüngung angeordnet ist,

2. Lager nach Anspruch 1, **dadurch gekennzeichnet, dass** der Membran (5) außenumfangsseitig ein Ring (9) aus einem metallischen Werkstoff zugeordnet ist.

3. Lager nach Anspruch 2, **dadurch gekennzeichnet, dass** die Membran (5) aus einem elastomerem Werkstoff gebildet ist der den Ring (9) allseitig umgibt.

4. Lager nach einem der Ansprüche 1 bis 3, **dadurch gekennzeichnet, dass** die Membran (5) kraft- und/oder formschlüssig in dem Traglagler (3) gehalten ist.

5. Lager nach einem der Ansprüche 1 bis 4, **dadurch gekennzeichnet, dass** die Membran (5) außenumfangsseitig eine Profilierung (10) aufweist.

6. Lager nach einem der Ansprüche 1 bis 5, **dadurch gekennzeichnet, dass** der Federkörper (4) aus elastomerem Werkstoff gebildet ist und außenumfangsseitig eine im wesentlichen zylinderförmig ausgebildete Verstärkung (11) aufweist die zumindest teilweise von dem Elastomer des Federkörpers (4) umgeben ist.

7. Lager nach einem der Ansprüche 1 bis 6, **dadurch gekennzeichnet, dass** das Traglager (3) am Außenumfang einen Befestigungsflansch (12) aufweist

8. Lager nach einem der Ansprüche 1 bis 7. **dadurch gekennzeichnet, dass** der Federkörper (4) und das Auflager (2) eine vormontierbare Einheit bilden.

9. Lager nach einem der Ansprüche 1 bis 8, **dadurch gekennzeichnet, dass** an dem Auflager (2) eine in den Raum (6) ragende Planscherscheibe (13) angeordnet ist.

10. Lager nach einem der Ansprüche 1 bis 9, **dadurch gekennzeichnet, dass** in dem Raum (6) ein Kanallager (14) angeordnet ist, welches den Raum (6) in einen Arbeits- (15) und einen Ausgleichsraum (16) teilt.

11. Lager nach einem der Ansprüche 1 bis 10, **dadurch gekennzeichnet, dass** das Traglager (3) auf der dem Auflager (2) abgewandten Seite einen Deckel (17) aufweist.

12. Lager nach einem der Ansprüche 1 bis 11, **dadurch gekennzeichnet, dass** die dem Auflager (2) zugewandte Seite des Traglagers (3) zumindest teilweise umgebördelt ist.

## Geänderte Patentansprüche

### Geänderte Patentansprüche gemäss Regel 86(2) EPÜ.

**1.** Hydraulisch dämpfendes Lager (1), umfassend ein Auflager (2) und ein im Wesentlichen zylinderförmiges Traglager (3), die durch einen Federkörper (4) verbunden sind sowie eine auf der dem Auflager (2) axial abgewandten Seite angeordnete Membran (5), wobei Auflager (2), Traglager (3), Federkörper (4) und Membran (5) einen Raum (6) begrenzen, der mit Dämpfungsflüssigkeit gefüllt ist, wobei der Membran (5) auf der dem Raum (6) zugewandten Seite ein Flansch (7) zugeordnet ist und dass der Flansch (7) an einer einen Gegenflansch (8) bildenden Querschnittsverjüngung angeordnet ist, **dadurch gekennzeichnet, dass** die Membran (5) außenumfangsseitig eine Profilierung (10) aufweist.
